# EUROPEAN PATENT SPECIFICATION

(11) **EP 2 583 774 B1**
(45) Date of publication and mention of the grant of the patent: **22.05.2019**
(21) Application number: 12189082.6
(22) Date of filing: 18.10.2012
(51) Int. Cl.: B22F 3/105, B33Y 10/00, B29C 64/153, B33Y 30/00

(54) **Additive manufacturing management of large dimensions parts**
Verwaltung der additiven Herstellung von grossen massiven Bauteilen
Gestion de fabrication additive de pièces massives de large dimension

(30) Priority: 21.10.2011 US 201161549868 P; 31.01.2012 US 201213362396
(43) Date of publication of application: 24.04.2013
(73) Proprietor: United Technologies Corporation, Farmington, CT 06032 (US)
(72) Inventor: Keremes, John J., Canoga Park, CA 91309 (US); Haynes, Jeffrey D., Canoga Park, CA 91309 (US); Gao, Youping, Canoga Park, CA 91309 (US); Matejczyk, Daniel Edward, Canoga Park, CA 91309 (US); Landau, Joel G., Canoga Park, CA 91309 (US)
(74) Representative: Dehns

(56) References cited:
- EP-A1- 0 759 848
- EP-A1- 0 863 806
- DE-A1-102009 051 479
- US-A- 5 658 412
- US-A1- 2005 280 185
- US-A1- 2008 047 628
- US-A1- 2008 241 404
- US-A1- 2010 044 547

## Description

### BACKGROUND

This disclosure generally relates to a LASER configuration for an additive manufacturing machine and process. More particularly, this disclosure relates to a configuration for relieving stress within a part during creation within the additive manufacturing assembly.

Typical manufacturing methods include various methods of removing material from a starting blank of material to form a desired completed part shape. Such methods utilize cutting tools to remove material to form holes, surfaces, overall shapes and more by subtracting material from the starting material. Such subtractive manufacturing methods impart physical limits on the final shape of a completed part. Additive manufacturing methods form desired part shapes by adding one layer at a time and therefore provide for the formation of part shapes and geometries that would not be feasible in part constructed utilizing traditional subtractive manufacturing methods.

Additive manufacturing utilizes a heat source such as a laser beam to melt layers of powdered metal to form the desired part configuration layer upon layer. The laser forms a melt pool in the powdered metal that solidifies. Another layer of powdered material is then spread over the formerly solidified part and melted to the previous melted layer to build a desired part geometry layer upon layer. Powdered material that is applied but not melted to become a portion of the part accumulates around and within the part. For smaller parts, the excess powdered material is not significant. However, as capabilities improve and larger parts are fabricated, the excess powdered metal may become significant consideration in both part fabrication capabilities and economic feasibility.

A prior art additive manufacturing process, is disclosed in EP-0759848.

### SUMMARY

According to one aspect of the present invention, there is provided an additive manufacturing process as claimed in claim 1.

In a further embodiment of any of the foregoing additive manufacturing processes, including reclaiming the excess deposited material and depositing the reclaimed material onto at least one of the part and the retaining wall

In a further embodiment of any of the foregoing additive manufacturing processes, including building the retaining wall in concert with the part such that a top layer of the retaining wall and a top layer of the part are substantially within a common plane.

A further embodiment of any of the foregoing additive manufacturing processes, including heating the part with the defocused laser.

A further embodiment of any of the foregoing additive manufacturing processes, including heating at least one of the part and the retaining wall with heating elements supported proximate the retaining wall.

A further embodiment of any of the foregoing additive manufacturing processes, including heating at least one of the part and the retaining wall with heat transmitted through the base plate.

A further embodiment of any of the foregoing additive manufacturing processes, including cutting the base plate to include the support portion and the open portion, for example a grid portion.

According to another aspect of the present invention, there is provided an additive manufacturing machine as claimed in claim 7.

In an embodiment of the foregoing additive manufacturing machine, the open region comprises a grid open to a space below the base plate.

In a further embodiment of any of the foregoing additive manufacturing machine, including a workspace defined by walls including heating elements for regulating a temperature within the workspace.

In a further embodiment of any of the foregoing additive manufacturing machine, including plate includes a heating element for heating a part during fabrication.

In a further embodiment of any of the foregoing additive manufacturing machine, including a recirculating system for gathering excess material flowing through the open regions of the base plate.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is schematic view of an example additive manufacturing machine.
Figure 2 is a schematic view of a base plate for the example additive manufacturing machine.
Figure 3 is a schematic view of the example additive manufacturing machine including a material reclaiming system.

### DETAILED DESCRIPTION

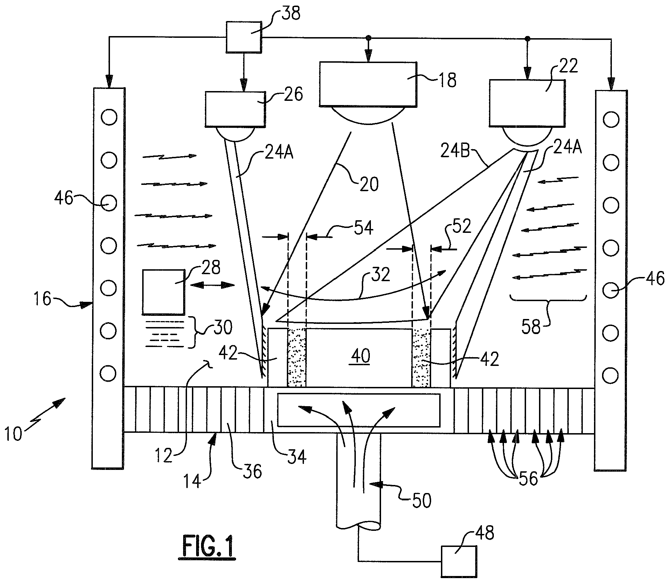

Referring to Figure 1, an additive manufacturing machine 10 includes a work space 12 that supports an energy transmitting device 18 and a base plate 14 on which a part 40 is supported during fabrication. In this example, the energy-transmitting device 18 emits a laser beam 20 that melts material 30 deposited by a material applicator 28. The example material 30 is a metal powder that is applied in a layer over the base plate 14 and subsequent layers are applied to produce a desired configuration of the part 40. The laser beam 20 directs energy that melts the powder material in a configuration that forms the desired part dimensions.

The additive manufacturing process utilizes material 30 that is applied in layers on top of the base plate 14. Selective portions of the layers are subsequently melted by the energy emitted from the laser beam 20. The energy focused on the top layer of the part 40 generates the desired heat to melt portions of the powdered metal. Conduction of heat through the solidified portions of the part and convection cooling to the ambient environment solidifies the melded portions to build and grow the part 40. The melting and solidification process is repeated layer by layer to build the part 40.

The powder 30 that is not utilized or melted to form the part 40 accumulates along the base plate 14 and around the part 40. In previous additive manufacturing systems the quantity of excess material was insignificant. Fabrication of parts 40 of a larger size accumulate a significant amount of excess non-utilized material the workspace 12 and therefore becomes a significant consideration both economically and to the part configuration.

In the disclosed example additive manufacturing machine 10, the base plate 14 includes a support portion 34 that supports the part 40 and a retaining wall 42. Surrounding the support portion 34 is an open area 36 through which material 30 may fall into a space below the base plate 14.

The example open areas 36 include a plurality of through holes 56. In this example the through holes 56 maybe drilled, cut by a water jet cutter or formed by any other known process. The number and size of the holes 56 is such as to provide sufficient structure to hole the support portion 34 with a sufficient rigidity, while also providing for powdered material to pass through the base plate 14. Moreover, the open areas 36 of the base plate 14 could also be fabricated using any method or configuration that provides sufficient porosity to allow the metal powder to pass there through.

During fabrication of the part 40, the retaining wall 42 is fabricated in conjunction with an outer perimeter and geometry of the part 40. The retaining wall 42 is formed of the same powder material as the part 40 and is melted by the laser beam 20. The beam 20 sweeps across both the part 40 and the retaining walls 42 as is indicated by the arrows 32. The retaining walls 42 are provided to maintain a gap 54 between the part 40 and the inner periphery of each of the retaining walls 42 that is filled with powder material 30. The walls 42 are of a thickness 52 that is determined to provide the strength required for retaining loose material between the part 40 and the retaining wall 42. In this example, the retaining wall is approximately .25 inch (6.35 mm) thick and the gap 54 between the part 40 and the retaining wall 42 is approximately .5 inch (12.7 mm) away from the outermost perimeter of the part 40. As should be understood, retaining walls of different thickness and spaced apart from the perimeter of the part 40 are also within the contemplation of this disclosure.

The base plate 14 includes the support portion 34 that is cut away in a shape that corresponds with an outer perimeter of the part 40. The open portions 36 include a plurality of openings 56 to allow for the material 30 to fall therethrough.

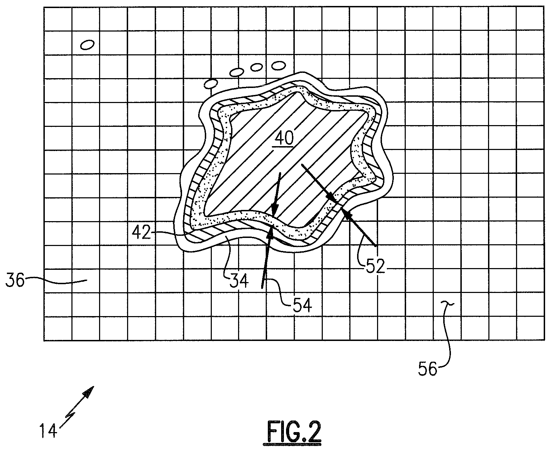

Referring to Figure 2 with continued reference to Figure 1, the example support plate 14 includes the open portions 36 that surround the support portion 34. The support portion 34 is disposed in a shape that corresponds with the desired part configuration. The retaining walls 42 are spaced apart from the outer perimeter of the part 40. The width 54 defines the space between the retaining wall 42 and the part 40 within which powdered material accumulates.

The width of the wall 52 is provided to maintain the strength required to support the wall along with the material accumulating between the part and the wall itself. In this example the wall 42 is of a uniform width 52. However, the wall may be tapered such that the width 52 would vary. Such a tapered retaining wall 42 would include a wider base that thinned as both retaining wall 42 and part 40 grew in height.

Fabrication of the part 40 proceeds with the application of material 30 over successive layers. Both the part 40 and the retaining wall 42 are held at a temperature less than the melting temperature of the material but higher than room temperature to facilitate melting and solidification of portions of the part 40. Moreover, maintaining an elevated temperature of the part 40 can aid in reducing the build-up of stresses during the fabrication process. Accordingly the disclosed additive manufacturing machine 10 includes features for heating both the part 40 and the retaining walls 42 to a desired temperature during fabrication.

Referring again to FIG. 1, the chamber 12 includes heating elements 46 that are disposed within walls 16 surrounding the workspace 12. The heating elements 46 generate a radiant heat 58 that maintains the entire workspace 12 at a desired temperature.

Also included within the disclosed additive manufacturing machine 10 are secondary energy emitting devices 22 and 26. Each of the secondary energy emitting devices 22 comprises a laser beam generating device that generates a defocused laser that emits energy to the outer surfaces of the retaining wall 42 as is indicated by the beam regions 24a. The secondary energy directing devices 22 may also direct energy over the top surface of both the part 40 and the retaining wall 42 as is indicated by beam region 24b. The defocused laser provides for heating and maintenance of a temperature of the part 40 in the retaining wall 42 without melting material or interfering with the fabrication of the part 40 that is conducted by the primary energy emitting device 18. Each of these features are controlled by a controller 38 that governs operation of the heating elements 46 and the energy emitting devices 18, 22 and 26.

The example additive manufacturing machine 10 also includes a heater 48 that provides a heating flow 50 within the support portion 34. The heating flow 50 maintains the support portion 34 at a desired temperature to aid in maintaining a temperature of the part 40 during fabrication. The heating flow 50 conducts heat from the bottom up through the part 40 to maintain a temperature desired for fabrication.

The process of fabrication utilizing the disclosed example additive manufacturing machine 10 includes the step of defining the support portion 34 by generating a profile to correspond with an outer periphery of the desired part geometry. The corresponding size of the support portion 34 is also configured to accommodate a buffer area to support the retaining wall 42 that will be fabricated in concert with the part 40.

Once the example support portion 34 is defined, it is assembled into the additive manufacturing machine 10 and fabrication may begin. Fabrication begins by dispersing material 30 onto the support portion 34 with the applicator 28. The energy emitting device 18 emits the laser beam 20 over the support portion 34 to selectively melt material 30 and/or the part 40 and/or the support portion 34. Upon cooling, the melted material, part and/or support portion fuse and/or solidify integrally. The retaining wall 42 and the part 40 are fabricated at the same time and in concert with each other. Material 30 that falls between the retaining wall 42 and the part 40 remains loose within this region. The retaining wall 42 and part 40 are heated to a temperature desired to provide specific desired fabrication parameters. This temperature maintains the material at a heated condition to lessen the effects of the heating and cooling process conducted by the laser beam 20. The laser beam 20 sweeps in a direction indicated by arrows 32 as commanded by the controller 38 to provide the desired part geometry. Moreover, the controller 38 also includes instructions to define the retaining wall 42 about the part 40.

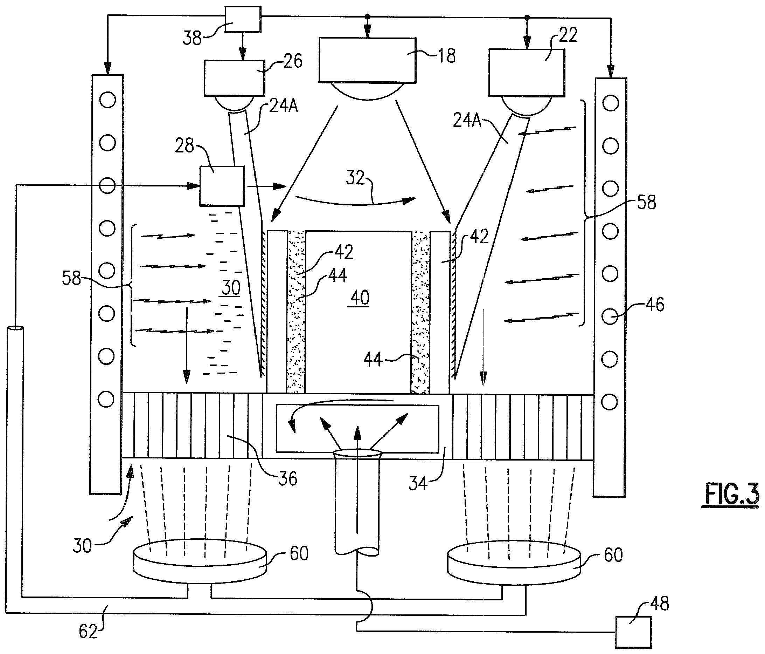

Referring to Figure 3, the example additive manufacturing machine 10 is shown with the part 40 and the retaining walls 42 during a later fabrication stage where both the retaining wall 42 and the part 40 are of a greater height. As the retaining wall 42 and part 40 increases in size the devices that provide for the warming and maintenance of the temperature of the part 40 become more important. In the disclosed embodiment, heating of the outer retaining walls 42 provides for a conduction of heat through the loose material 44 disposed within the gap 54 such that the part 40 is maintained at a desired temperature.

In the disclosed embodiment, the process continues with simultaneous fabrication of the retaining wall 42 surrounding the part 40 and the part 40. Excess material 30 falls between and is maintained between a retaining wall 42 and the part 40. Material that falls outside of the retaining wall 42 falls through the open area 36 and is gathered by a catch device 60. The catch device 60 also includes a return line 62 such that the material that is recovered through the open areas 36 can be utilized and routed back to the applicator 28 for further use and fabrication of the part 40 and the retaining wall 42. Once the part 40 is completed it is removed from the support portion 34 along with the retaining walls 42 according to known methods.

The example additive manufacturing machine disclosed includes features for maintaining part integrity during fabrication while managing the large amounts of material 30 that are utilized and that flow through the workspace 12 during the fabrication process. Moreover, the example additive manufacturing system includes features for reclaiming the unused powder material that falls through the open areas 36 into the catch 60. The catch 60 is part of a reclaiming system that reclaims the unused powdered material for use in subsequent operations or in the disclosed embodiment in the current operation and fabrication of a part. Alternatively, the catch 60 may be utilized in concert to a return line 62 that immediately reuses the material by the applicator 28.

Although an example embodiment has been disclosed, a worker of ordinary skill in this art would recognize that certain modifications would come within the scope of this disclosure. For that reason, the following claims should be studied to determine the scope and content of this invention.

## Claims

1. An additive manufacturing process comprising:
defining a boundary surrounding a periphery of a desired part geometry;
depositing material (30) onto a base plate (14) including a support portion (34) for supporting a retaining wall (42), and a part (40) and an open portion (36) surrounding the support portion (34);
directing energy to portions of the deposited material (30) to form the retaining wall (42) along the defined boundary and a part (40) according to the desired part geometry;
retaining deposited material (44) between the retaining wall (42) and the periphery of the part (40);
evacuating excess deposited material (30) disposed outside the retaining wall (42) through the open portion (36); and
directing energy to the outer surfaces of the formed retaining wall (42) with a defocused laser to heat the retaining wall (42) to a desired temperature greater than ambient temperature and less than a temperature required to melt the deposited material (30) and provide a conduction of heat through said retained deposited material (44) to the part (40) to maintain the part (40) at a desired temperature.

2. The additive manufacturing process as recited in claim 1 including reclaiming the excess deposited material (30) and depositing the reclaimed material onto at least one of the part (40) and the retaining wall (42).

3. The additive manufacturing process as recited in any preceding claim, including building the retaining wall (42) in concert with the part (40) such that a top layer of the retaining wall (42) and a top layer of the part (40) are substantially within a common plane.

4. The additive manufacturing process as recited in any preceding claim, including heating the part (40) with a defocused laser.

5. The additive manufacturing process as recited in any preceding claim, including heating at least one of the part (40) and the retaining wall (42) with heating elements (46) supported proximate the retaining wall (42).

6. The additive manufacturing process as recited in any preceding claim, including heating at least one of the part (40) and the retaining wall (42) with heat transmitted through the base plate.

7. The additive manufacturing process as recited in any preceding claim, wherein the open region (36) comprises a grid open to a space below the base plate (14).

8. An additive manufacturing machine (10) comprising:
a base plate (14) for supporting fabrication of a desired part geometry, wherein the base plate (14) includes a support portion (34) defined based on the desired part geometry and an open region (36) surrounding the support portion (34), the open regions (36) including a plurality of openings (56), wherein the support portion (34) is shaped to correspond to an outer periphery of the desired part geometry and a retaining wall (42) spaced apart from the outer periphery of the desired part geometry;
a material applicator (28) for depositing material (44) onto the base plate (14);
an energy directing device (18) for forming a portion of the deposited material; and
at least one secondary energy-directing device (22, 26) configured to emit a defocused laser beam (24A, 24B) to heat outer surfaces of the retaining wall (42) to a temperature greater than an ambient temperature and less than a temperature required to melt the deposited material (44).

9. The additive manufacturing machine (10) as recited in claim 8, wherein the open region (36) comprises a grid open to a space below the base plate (14).

10. The additive manufacturing machine (10) as recited in claim 8 or 9, including a workspace (12) defined by walls (16) including heating elements (46) for regulating a temperature within the workspace (12).

11. The additive manufacturing machine (10) as recited in any of claims 8 to 10, wherein the base plate (14) includes a heating element for heating a part (40) during fabrication.

12. The additive manufacturing machine (10) as recited in any of claims 8 to 11, including a recirculating system (60, 62) for gathering excess material flowing through the open regions (36) of the base plate (14).

## Patentansprüche

1. Additives Herstellungsverfahren, umfassend:
Definieren einer Begrenzung, die einen Umfang einer gewünschten Teilegeometrie umgibt;
Ablagern von Material (30) auf einer Grundplatte (14), die einen Stützabschnitt (34) zum Stützen einer Stützwand (42) und ein Teil (40) und einen offenen Abschnitt (36), der den Stützabschnitt (34) umgibt, beinhaltet;
Leiten von Energie zu Abschnitten des abgelagerten Materials (30), um die Stützwand (42) entlang der definierten Begrenzung und ein Teil (40) gemäß der gewünschten Teilegeometrie zu bilden;
Halten des abgelagerten Materials (44) zwischen der Stützwand (42) und dem Umfang des Teils (40);
Ausleeren von überschüssigem abgelagertem Material (30), das außerhalb der Stützwand (42) angeordnet ist, durch den offenen Abschnitt (36); und
Leiten von Energie zu den Außenflächen der gebildeten Stützwand (42) mit einem defokussierten Laser, um die Stützwand (42) auf eine gewünschte Temperatur zu erhitzen, die höher als die Umgebungstemperatur ist und geringer als eine Temperatur, die zum Schmelzen des abgelagerten Materials (30) nötig ist, und eine Wärmeleitung durch das gehaltene abgelagerte Material (44) zu dem Teil (40) bereitzustellen, um das Teil (40) bei einer gewünschten Temperatur beizubehalten.

2. Additives Herstellungsverfahren nach Anspruch 1, das das Rückgewinnen des überschüssigen abgelagerten Materials (30) und das Ablagern des zurückgewonnenen Materials auf mindestens einem von dem Teil (40) und der Stützwand (42) beinhaltet.

3. Additives Herstellungsverfahren nach einem der vorhergehenden Ansprüche, das das Aufbauen der Stützwand (42) in Verbindung mit dem Teil (40) beinhaltet, sodass sich eine obere Schicht der Stützwand (42) und eine obere Schicht des Teils (40) im Wesentlichen innerhalb einer gemeinsamen Ebene befinden.

4. Additives Herstellungsverfahren nach einem der vorhergehenden Ansprüche, das das Erhitzen des Teils (40) mit einem defokussierten Laser beinhaltet.

5. Additives Herstellungsverfahren nach einem der vorhergehenden Ansprüche, das das Erhitzen mindestens eines von dem Teil (40) und der Stützwand (42) mit Heizelementen (46) beinhaltet, die in der Nähe der Stützwand (42) gestützt werden.

6. Additives Herstellungsverfahren nach einem der vorhergehenden Ansprüche, das das Erhitzen mindestens eines von dem Teil (40) und der Stützwand (42) mit Wärme, die durch die Grundplatte übertragen wird, beinhaltet.

7. Additives Herstellungsverfahren nach einem der vorhergehenden Ansprüche, wobei der offene Bereich (36) ein Gitter umfasst, das zu einem Raum unter der Grundplatte (14) offen ist.

8. Maschine (10) zum additiven Herstellen, umfassend:
eine Grundplatte (14) zum Unterstützen einer Fertigung einer gewünschten Teilegeometrie, wobei die Grundplatte (14) einen Stützabschnitt (34), der auf Grundlage der gewünschten Teilegeometrie definiert ist, und einen offenen Bereich (36), der den Stützabschnitt (34) umgibt, beinhaltet, wobei die offenen Bereiche (36) eine Vielzahl von Öffnungen (56) beinhalten, wobei der Stützabschnitt (34) geformt ist, um einem Außenumfang der gewünschten Teilegeometrie und einer Stützwand (42) zu entsprechen, die von dem Außenumfang der gewünschten Teilegeometrie beabstandet ist;
eine Materialauftragsvorrichtung (28) zum Ablagern von Material (44) auf der Grundplatte (14);
eine energieleitende Vorrichtung (18) zum Bilden eines Abschnitts des gewünschten Materials; und
mindestens eine sekundäre Energieleitvorrichtung (22, 26), die dazu konfiguriert ist, einen defokussierten Laserstrahl (24A, 24B) auszugeben, um Außenflächen der Stützwand (42) auf eine Temperatur zu erhitzen, die größer als eine Umgebungstemperatur und geringer als eine Temperatur ist, die zum Schmelzen des abgelagerten Materials (44) nötig ist.

9. Maschine (10) zum additiven Herstellen nach Anspruch 8, wobei der offene Bereich (36) ein Gitter umfasst, das zu einem Raum unterhalb der Grundplatte (14) offen ist.

10. Maschine (10) zum additiven Herstellen nach Anspruch 8 oder 9, die einen Arbeitsraum (12) beinhaltet, der durch Wände (16) definiert ist, die Heizelemente (46) zum Regulieren einer Temperatur innerhalb des Arbeitsraums (12) beinhaltet.

11. Maschine (10) zum additiven Herstellen nach einem der Ansprüche 8 bis 10, wobei die Grundplatte (14) ein Heizelement zum Erhitzen eines Teils (40) während der Fertigung beinhaltet.

12. Maschine (10) zum additiven Herstellen nach einem der Ansprüche 8 bis 11, die ein Rückführsystem (60, 62) zum Sammeln von überschüssigem Material beinhaltet, das durch die offenen Bereiche (36) der Grundplatte (14) strömt.

## Revendications

1. Procédé de fabrication additive comprenant :
la définition d'une limite entourant une périphérie d'une géométrie de pièce souhaitée ;
le dépôt de matériau (30) sur une plaque de base (14) incluant une partie de support (34) pour supporter une paroi de retenue (42), et une pièce (40) et une partie ouverte (36) entourant la partie de support (34) ;
l'orientation d'énergie vers des parties du matériau déposé (30) pour former la paroi de retenue (42) le long de la limite définie et une pièce (40) selon la géométrie de pièce souhaitée ;
la retenue du matériau déposé (44) entre la paroi de retenue (42) et la périphérie de la pièce (40) ;
l'évacuation de l'excès de matériau déposé (30) disposé à l'extérieur de la paroi de retenue (42) à travers la partie ouverte (36) ; et
l'orientation d'énergie vers les surfaces externes de la paroi de retenue formée (42) avec un laser défocalisé pour chauffer la paroi de retenue (42) à une température souhaitée supérieure à la température ambiante et inférieure à une température requise pour faire fondre le matériau déposé (30) et assurer une conduction thermique à travers ledit matériau déposé retenu (44) vers la pièce (40) pour maintenir la pièce (40) à une température souhaitée.

2. Procédé de fabrication additive selon la revendication 1 incluant la récupération de l'excès de matériau déposé (30) et le dépôt du matériau récupéré sur au moins un élément parmi la pièce (40) et la paroi de retenue (42).

3. Procédé de fabrication additive selon une quelconque revendication précédente, incluant la construction de la paroi de retenue (42) de concert avec la pièce (40) de sorte qu'une couche supérieure de la paroi de retenue (42) et une couche supérieure de la pièce (40) sont sensiblement à l'intérieur d'un plan commun.

4. Procédé de fabrication additive selon une quelconque revendication précédente, incluant le chauffage de la pièce (40) avec un laser défocalisé.

5. Procédé de fabrication additive selon une quelconque revendication précédente, incluant le chauffage d'au moins un élément parmi la pièce (40) et la paroi de retenue (42) avec des éléments chauffants (46) supportés à proximité de la paroi de retenue (42).

6. Procédé de fabrication additive selon une quelconque revendication précédente, incluant le chauffage d'au moins un élément parmi la pièce (40) et la paroi de retenue (42) avec un chauffage transmis à travers la plaque de base.

7. Procédé de fabrication additive selon une quelconque revendication précédente, dans lequel la région ouverte (36) comprend une grille ouverte à un espace en dessous de la plaque de base (14).

8. Machine de fabrication additive (10) comprenant :
une plaque de base (14) pour supporter la fabrication d'une géométrie de pièce souhaitée, dans laquelle la plaque de base (14) inclut une partie de support (34) définie sur la base de la géométrie de pièce souhaitée et une région ouverte (36) entourant la partie de support (34), les régions ouvertes (36) incluant une pluralité d'ouvertures (56), dans laquelle la partie de support (34) est formée pour correspondre à une périphérie externe de la géométrie de pièce souhaitée et à une paroi de retenue (42) espacé de la périphérie externe de la géométrie de pièce souhaitée ;
un applicateur de matériau (28) pour déposer le matériau (44) sur la plaque de base (14) ;
un dispositif d'orientation d'énergie (18) pour former une partie du matériau déposé ; et
au moins un dispositif d'orientation d'énergie secondaire (22, 26) configuré pour émettre un faisceau laser défocalisé (24A, 24B) pour chauffer des surfaces externes de la paroi de retenue (42) à une température supérieure à une température ambiante et inférieure à une température requise pour faire fondre le matériau déposé (44) .

9. Machine de fabrication additive (10) selon la revendication 8, dans laquelle la région ouverte (36) comprend une grille ouverte à un espace en dessous de la plaque de base (14).

10. Machine de fabrication additive (10) selon la revendication 8 ou 9 incluant un espace de travail (12) défini par des parois (16) incluant des éléments chauffants (46) pour réguler une température à l'intérieur de l'espace de travail (12).

11. Machine de fabrication additive (10) selon l'une quelconque des revendications 8 à 10, dans laquelle la plaque de base (14) inclut un élément chauffant pour chauffer une pièce (40) pendant la fabrication.

12. Machine de fabrication additive (10) selon l'une quelconque des revendications 8 à 11, incluant un système de recirculation (60, 62) pour rassembler l'excès de matériau s'écoulant à travers les régions ouvertes (36) de la plaque de base (14).
